# EUROPÄISCHE PATENTSCHRIFT

(11) **EP 3 782 894 B1**
(45) Veröffentlichungstag und Bekanntmachung des Hinweises auf die Patenterteilung: **13.04.2022**
(21) Anmeldenummer: 19192562.7
(22) Anmeldetag: 20.08.2019
(51) Int. Cl.: B62M 6/45, B62M 6/50

(54) **PEDELEC-PELETONSTEUERUNG**
PEDELEC PELETON CONTROL
COMMANDE DE LA BICYCLETTE ÉLECTRIQUE PEDELEC

(43) Veröffentlichungstag der Anmeldung: 24.02.2021
(73) Patentinhaber: Amprio GmbH, 41460 Neuss (DE)
(72) Erfinder: MISGELD, Berno Johannes Engelbert, 41460 Neuss (DE); GREVEN, Dietmar, 41460 Neuss (DE)
(74) Vertreter: terpatent Patentanwälte ter Smitten Eberlein-Van Hoof Rütten Daubert

(56) Entgegenhaltungen:
- DE-A1-102014 101 845

## Beschreibung

Die Erfindung bezieht sich auf eine Pedelec-Peletonsteuerung zur Ermittlung einer Eigen-Wunschgeschwindigkeit in einem Pedelec-Peleton für ein Pedelec mit einem unterstützenden Traktionsmotor, sowie ein Verfahren mit einer solchen Steuerung.

Ein Pedelec ist vorliegend ein Fahrrad, das einen unterstützenden elektrischen Traktionsmotor aufweist, der im Allgemeinen ausschließlich unterstützend arbeitet. Lediglich bei sehr niedrigen Geschwindigkeiten im einstelligen km/h-Bereich kann in dem Pedelec eine Schiebefunktion implementiert sein, bei der auch ohne ein Fahrer-Drehmoment der Traktionsmotor aktiv ist. Unter einem Pedelec-Peleton sind vorliegend mindestens zwei Pedelecs zu verstehen, die durch eine drahtlose Datenverbindung miteinander kommunizieren und die ihre jeweilige Eigengeschwindigkeit miteinander abstimmen, um mit möglichst gleicher Geschwindigkeit zu fahren.

Die Geschwindigkeit eines Pedelecs hängt von einer Vielzahl von Faktoren ab, beispielsweise vom Gesamtgewicht des Pedelecs einschließlich Fahrer, von der Windlast, von dem Nickwinkel, also der lokalen Steigung bzw. dem Gefälle, von der Fahrerleistung etc. Limitierende Faktoren können beispielsweise das Höhenprofil bis zu einem in ein Navigationsgerät eingegebenen Navigationsziel oder der aktuelle Ladungszustand der Traktionsbatterie sein.

Da die Gesamt-Antriebsleistung beim Pedelec sowohl von dem menschlichen Fahrer als auch dem Unterstützungsgrad des Traktionsmotors abhängt, ist eine Synchronisierung aller Pedelecs in einem Pedelec-Peleton nicht einfach zu realisieren. Aus DE 10 2014 101 845 A1 ist eine Master/Slave-Peletonsteuerung bekannt, bei der ein Master-Pedelec die Soll-Geschwindigkeit für alle Slave-Pedelecs bestimmt. Sobald nur eine einzige Datenverbindung zwischen dem Master-Pedelec und einem Slave-Pedelec, beispielsweise aufgrund einer zu großen Entfernung zueinander, abbricht, hat das betreffende Slave-Pedelec keine aktuelle Soll-Geschwindigkeit mehr und kann seinerseits auch nicht mehr die von dem Master-Pedelec ermittelte Soll-Geschwindigkeit beeinflussen. Aufgabe der Erfindung ist es vor diesem Hintergrund, eine Pedelec-Peletonsteuerung mit besserer Redundanz zu schaffen.

Diese Aufgabe wird erfindungsgemäß gelöst mit einer Pedelec-Peletonsteuerung mit den Merkmalen des Anspruchs 1, sowie einem Verfahren nach Anspruch 5.

Die erfindungsgemäße Pedelec-Peletonsteuerung ist Teil eines Pedelecs mit einem unterstützenden Traktionsmotor, der im Wesentlichen ausschließlich unterstützend aktiv ist, also nur dann aktiv ist, wenn eine Fahrer-Tretleistung beziehungsweise -drehmoment an der Tretkurbel erbracht wird. Die Pedelec-Peletonsteuerung dient der Ermittlung einer Eigen-Wunschgeschwindigkeit in einem Pedelec-Peleton mit mehreren Pedelecs, die über eine drahtlose Datenverbindung miteinander kommunizieren. Die Bestimmung und Abstimmung der Wunschgeschwindigkeiten aller Pedelecs des Peletons erfolgt durch die Peletonsteuerung jedes Pedelecs völlig eigenständig. Es gibt also keine hierarchische Struktur und es gibt kein Master-Pedelec, das eine solche Geschwindigkeit für alle Mitglieder des Peletons vorgibt. Die Abstimmung der Wunschgeschwindigkeiten erfolgt vorliegend stets mit allen Pedelecs, mit denen eine drahtlose Datenverbindung besteht, erfolgt jedoch nicht notwendigerweise mit allen Mitgliedern des Peletons, insbesondere nicht mit den Pedelecs, die zwar zum Peleton gehören, mit denen jedoch dauerhaft oder temporär keine Datenverbindung besteht.

Die Pedelec-Peletonsteuerung weist ein Empfangsmodul zum drahtlosen Empfangen von Fremd-Wunschgeschwindigkeiten anderer Pedelecs des Peletons und ein Sendemodul zum drahtlosen Senden einer Eigen-Wunschgeschwindigkeit an die anderen Peleton-Pedelecs auf. Unter einer Wunschgeschwindigkeit ist eine quantitative Angabe zu verstehen, die in jedem Pedelec von einer Motorsteuerung, die die Traktionsmotor-Leistungselektronik ansteuert, dazu benutzt wird, den Unterstützungsgrad einzustellen, mit dem die elektrische Leistung des Traktionsmotors in Abhängigkeit von der Fahrer-Tretleistung eingestellt wird. Unter dem "Unterstützungsgrad" ist vorliegend auch die Einstellung der Unterstützungsleistung oder des Unterstützungsmomentes zu verstehen, beispielsweise realisiert durch die Anpassung einer bereits nach einer Unterstützungskennlinie berechneten Unterstützung.

Die Pedelec-Peletonsteuerung weist ein Wunschgeschwindigkeits-Ermittlungsmodul zur Ermittlung einer Eigen-Wunschgeschwindigkeit aus von dem Empfangsmodul empfangenen Fremd-Wunschgeschwindigkeiten der anderen Peleton-Pedelecs und, gemäß eine bevorzugten Ausführung, aus dem Messwert mindestens eines eigenen Pedelec-Sensors auf. Der betreffende Pedelec-Sensor kann beispielsweise ein Pedelecgeschwindigkeits-Sensor, ein Batterieladungs-Sensor, ein Wind-Sensor, ein Außentemperatur-Sensor und/oder ein Nickwinkel-Sensor sein. Der in dem Wunschgeschwindigkeit-Ermittlungsmodul benutzte Algorithmus kann (beispielsweise aus den vorliegenden Wunschgeschwindigkeiten ein Mittelwert bestimmen, wenn die eigene Geschwindigkeit im oberen Drittel aller Fremd-Wunschgeschwindigkeiten liegt), oder einen Wert im unteren Drittel aller Wunschgeschwindigkeiten als neue Eigen-Wunschgeschwindigkeit bestimmen, wenn die eigene Pedelecgeschwindigkeit vergleichsweise niedrig ist.

Im Unterschied zu dem aus dem Stand der Technik bekannten Master/Slave-Konzept, ermittelt vorliegend in jedem Pedelec die jeweilige Pedelec-Peletonsteuerung aus allen Fremd-Wunschgeschwindigkeiten der Pedelecs im Empfangsbereich des Empfangsmoduls eigenständig eine neue Eigen-Wunschgeschwindigkeit.

Die Pedelec-Peletonsteuerung weist ferner einen Eigen-Wunschgeschwindigkeits-Speicher auf, der mit dem Wunschgeschwindigkeits-Ermittlungsmodul verbunden ist, und der von dem Wunschgeschwindigkeit-Ermittlungsmodul die zuletzt ermittelte neue Eigen-Wunschgeschwindigkeit übermittelt bekommt. Der Eigen-Wunschgeschwindigkeits-Speicher ist mit dem Sendemodul verbunden, das die ermittelte Eigen-Wunschgeschwindigkeit aus dem Eigen-Wunschgeschwindigkeits-Speicher sendet, sodass die neue ermittelte Eigen-Wunschgeschwindigkeit von den anderen Peleton-Pedelecs im Sende- bzw. Empfangsbereich des Empfangsmoduls bzw. des Sendemoduls empfangen werden können, damit diese ihrerseits mit ihren Pedelec-Peletonsteuerungen ihre jeweiligen Eigen-Wunschgeschwindigkeiten ermitteln können.

Da die Pedelec-Peletonsteuerung in jedem einzelnen Pedelec des Peletons eigenständig die Eigen-Wunschgeschwindigkeit ermittelt, die in der Pedelec-Motorsteuerung den Unterstützungsgrad beeinflusst, ist die Synchronisierung der Pedelecs in einem Peleton in hohem Maße redundant und störungsrobust. Darüber hinaus ist die Pedelec-Peletonsteuerung auch in Bezug auf kurzfristig hinzukommende oder wegfallende Peleton-Pedelecs schnell und tolerant.

Die Peletonsteuerung und insbesondere die Algorithmen zur Ermittlung der Eigen-Wunschgeschwindigkeit in dem Wunschgeschwindigkeits-Ermittlungsmodul sind so ausgelegt, dass ein regelungstechnisches Aufschwingen verhindert wird. Hierfür kann beispielsweise eine entsprechende Trägheit bei der Ermittlung der Eigen-Wunschgeschwindigkeit implementiert sein, damit eine kurzzeitige Änderung beispielsweise einer Fremd-Wunschgeschwindigkeit nicht sofort zu einer entsprechenden Änderung der Eigen-Wunschgeschwindigkeit führt. Eine Neuermittlung der Eigen-Wunschgeschwindigkeit kann beispielsweise alle 500 ms (Millisekunden) erfolgen.

Als Messwert eines eigenen Pedelec-Sensors kann insbesondere die Pedelecgeschwindigkeit, die von dem Pedelecgeschwindigkeits-Sensor geliefert wird, in die Ermittlung der Eigen-Wunschgeschwindigkeit einbezogen werden. In die Ermittlung der neuen Eigen-Wunschgeschwindigkeit kann das Wunschgeschwindigkeits-Ermittlungsmodul jedoch auch zusätzlich oder alternativ einen Fahrer-Ermüdungswert einbeziehen, der von einem Fahrer-Ermüdungsmodell-Modul ermittelt wird. Das Fahrer-Ermüdungsmodell-Modul ermittelt insbesondere die zukünftige Fahrer-Tretleistung anhand der Historie, aus der sich beispielsweise der Ermüdungsgrad des Fahrers für die Zukunft abschätzen lässt.

Besonders bevorzugt kann vorgesehen sein, dass an dem Pedelec ein Navigationsgerät vorgesehen ist, das Höhenprofil-Daten des geplanten Fahrwegs zum Navigationsziel an das Wunschgeschwindigkeits-Ermittlungsmodul sendet, das die Eigen-Wunschgeschwindigkeit in Abhängigkeit von den Höhenprofil-Daten ermittelt. Zusätzlich kann beispielsweise auch der Batterieladungs-Sensor, der den Grad der momentanen Batterieladung als Ladungswert ausgibt, in die Ermittlung der Eigen-Wunschgeschwindigkeit mit einbezogen werden. Auf diese Weise kann beispielsweise verhindert werden, dass die Traktionsbatterie leer ist, bevor das Navigationsziel erreicht ist.

Gemäß dem erfindungsgemäßen Verfahren nach Anspruch 5 sind zur Ermittlung einer Eigen-Wunschgeschwindigkeit die folgenden Verfahrensschritte vorgesehen: Einlesen aller verfügbaren Fremd-Wunschgeschwindigkeiten der fremden Peleton-Pedelecs aus dem Empfangsmodul in das Wunschgeschwindigkeits-Ermittlungsmodul,
Einlesen des Sensor-Wertes eines Sensors des eigenen Pedelecs in das Wunschgeschwindigkeits-Ermittlungsmodul,
Ermittlung der neuen Eigen-Wunschgeschwindigkeit in dem Wunschgeschwindigkeits-Ermittlungsmodul, und
Senden der neuen Eigen-Wunschgeschwindigkeit durch das Sendemodul.

Besonders bevorzugt ist vorgesehen, dass die neue Eigen-Wunschgeschwindigkeit an die Motorsteuerung übertragen wird.

Im Folgenden wird ein Ausführungsbeispiel der Erfindung anhand der Figuren näher erläutert. Es zeigen:
Figur 1 schematisch ein Pedelec mit einer Pedelec-Peletonsteuerung, und

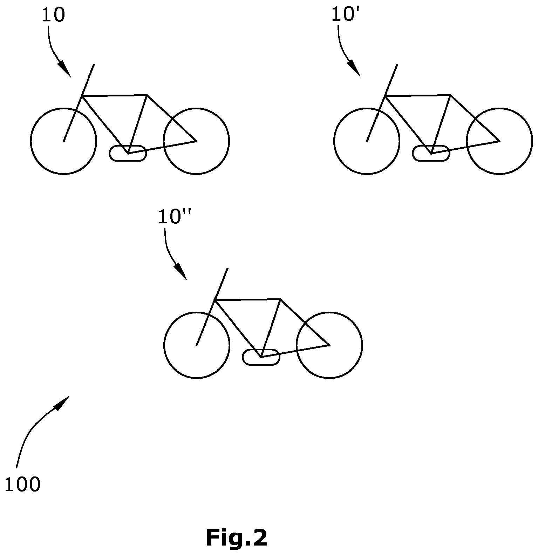

Figur 2 schematisch ein Pedelec-Peleton mit drei Pedelecs mit jeweils identischen Pedelec-Peletonsteuerungen der Figur 1.

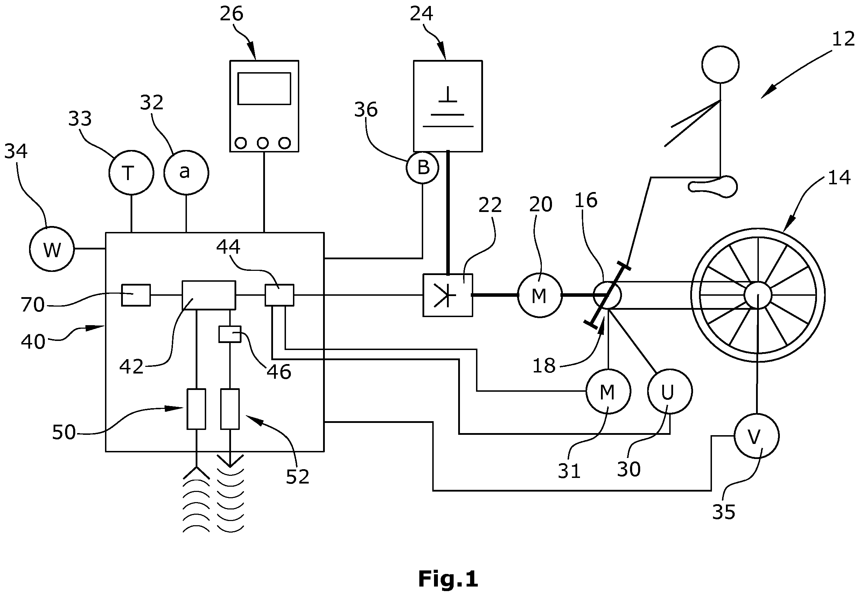

In der Figur 1 ist schematisch ein Pedelec 10 dargestellt, das einen unterstützenden Hilfs-Traktionsmotor 20 aufweist, der einen Fahrer 12 beim Fahren unterstützt. Im einem reinen Schiebebetrieb unterhalb einer Geschwindigkeit von 7 km/h kann der Traktionsmotor 20 auch als alleiniger Antrieb dienen. Das Pedelec 10 weist ein Antriebsrad 14 auf, das angetrieben wird und in der Regel das Hinterrad ist. Das Antriebsrad 14 wird von dem Fahrer 12 über eine Tretkurbel 18 und ein Kettenblatt 16 über eine Fahrradkette angetrieben. Das Kettenblatt 16 wird ferner auch über den Traktionsmotor 20 angetrieben. Der Traktionsmotor 20 wird durch eine Leistungselektronik 22 mit elektrischer Energie versorgt, die in einer Traktionsbatterie 24 gespeichert ist. Die Leistungselektronik 22 wird durch eine elektronische Motorsteuerung 44 gesteuert, in der insbesondere der Unterstützungsgrad ständig ermittelt und durch die Leistungselektronik 22 entsprechend angesteuert wird. Unter dem Unterstützungsgrad wird vorliegend das Verhältnis zwischen der Traktionsmotor-Antriebsleistung und der Fahrer-Tretleistung beziehungsweise dem Fahrer-Tretdrehmoment verstanden.

Das Pedelec 10 weist ein Navigationsgerät 26 auf, in das ein Navigationsziel manuell eingegeben werden kann, sodass das Navigationsgerät Höhenprofil-Daten zur Verfügung stellt, die das Höhenprofil vom Pedelec-Aufenthaltsort bis zum Zielort beschreiben.

Das Pedelec 10 weist mehrere Sensoren auf, nämlich einen Tretkurbeldrehzahl-Sensor 30, der die Drehzahl U der Tretkurbel 18 bestimmt, einen Fahrer-Drehmoment-Sensor 31, der das von dem Fahrer 12 auf die Tretkurbel 18 aufgebrachte Drehmoment M bestimmt, einen Pedelecgeschwindigkeits-Sensor 35, der vorliegend am Antriebsrad 14 angebracht ist und die Pedelecgeschwindigkeit V über Grund ermittelt, einen Außentemperatur-Sensor 33, der die Lufttemperatur T der Umgebung ermittelt, einen Pedelec-Nickwinkel-Sensor 32, der den Nickwinkel a, also die Neigung des Pedelecs 10 um seine Querachse im Verhältnis zur Erdhorizontalen, bestimmt, einen Wind-Sensor 34, der die von vorne kommende Komponente des Fahrtwindes W bestimmt, sowie einen Batterieladungs-Sensor 36, der die aktuelle Batterieladung B bestimmt, also angibt, wie viel elektrische Energie in der Traktionsbatterie 24 noch zur Verfügung steht.

Alle Sensoren 30 - 36 sind mit einer Peletonsteuerung 40 über Datenleitungen und/oder drahtlos verbunden, in der die Messwerte der Sensoren 30 - 36 für die Steuerung der Leistungselektronik 22 bzw. des Traktionsmotors 20 benutzt werden.

Die Peletonsteuerung 40 weist unter anderem ein Wunschgeschwindigkeits-Ermittlungsmodul 42 auf, das mit der Motorsteuerung 44 sowie mit allen Sensoren 30 - 36 und dem Navigationsgerät 26 verbunden ist, und das auf alle Informationen der Sensoren 30 - 36 und des Navigationsgeräts 26 zugreift.

Die Peletonsteuerung 40 weist ein Empfangsmodul 50 auf zum drahtlosen Empfangen von Fremd-Wunschgeschwindigkeiten VF anderer Pedelecs 10', 10" eines Pedelec-Peletons 100. Die Peletonsteuerung 40 weist ein Sendemodul 52 auf, mit dem drahtlos eine in einem Eigen-Wunschgeschwindigkeits-Speicher 46 gespeicherte Eigen-Wunschgeschwindigkeit VW ständig gesendet wird.

Schließlich weist die Pedelec-Peletonsteuerung 40 ein Ermüdungsmodell-Modul 70 auf, das mit dem Wunschgeschwindigkeits-Ermittlungsmodul 42 verbunden ist, und eine Prognose von Fahrer-Ermüdungswerten E für die Zukunft ausgibt.

Zu Beginn einer Peleton-Fahrt verbinden sich die Peleton-Steuerungen 40 der Pedelecs 10,10',10" miteinander, sodass die Mitglieder des Peletons 100 festgelegt sind. Neue Mitglieder-Pedelecs können nur mit einer Zustimmung einer oder mehrerer Pedelecs 10,10',10" des bereits bestehenden Peletons 100 in das Peleton aufgenommen werden. Die Steuerung des Verbindungsprozesses durch die Fahrer 12 der betreffenden Pedelecs 10,10',10" erfolgt jeweils über das Navigationsgerät 26, das ein Display sowie eine oder mehrere Eingabetasten aufweist. Ferner geben die Fahrer 12 in das Navigationsgerät 26 ein Navigationsziel ein.

Sobald alle Pedelecs 10,10',10" des Peletons 100 jeweils eine festgelegte Aktivierungsgeschwindigkeit überschritten haben, wird die Peletonsteuerung 40 automatisch aktiviert. Bei aktivierter Peletonsteuerung 40 ermittelt das Wunschgeschwindigkeits-Ermittlungsmodul 42 kontinuierlich eine Eigen-Wunschgeschwindigkeit VW des betreffenden Pedelecs 10, die kontinuierlich in den Eigen-Wunschgeschwindigkeit-Speicher 42 abgelegt wird, sodass das Sendemodul 52 die aktuell errechnete Eigen-Wunschgeschwindigkeit VW kontinuierlich sendet. Die Motorsteuerung 44 empfängt kontinuierlich die aktuelle Eigen-Wunschgeschwindigkeit VW und bestimmt hieraus den aktuellen Unterstützungsgrad. Aus dem aktuellen Unterstützungsgrad, der Pedelec-Geschwindigkeit V, dem Fahrerdrehmoment M, der TretkurbelDrehzahl U und der Pedelecgeschwindigkeit V ergibt sich in der Motorsteuerung 44 ein Unterstützungsgrad beziehungsweise ein entsprechendes Steuerungssignal, mit dem die Leistungselektronik 22 angesteuert wird, sodass der Traktionsmotor 20 mit einer entsprechenden elektrischen Energie aus der Traktionsbatterie 24 gespeist wird.

Das Empfangsmodul 40 empfängt kontinuierlich die Fremd-Wunschgeschwindigkeiten VF der anderen Pedelecs 10',10" des Peletons 100. Das Wunschgeschwindigkeits-Ermittlungsmodul 42 ermittelt aus den empfangenen Fremd-Wunschgeschwindigkeiten VF und der eigenen bisherigen Eigen-Wunschgeschwindigkeit VW eine neue Eigen-Wunschgeschwindigkeit VW. In diese Ermittlung der neuen Eigen-Wunschgeschwindigkeit VW geht ferner auch der aktuelle Fahrer-Ermüdungswert E, der Pedelec-Nickwinkel a, die Windgeschwindigkeit W, das zukünftige Höhenprofil sowie der Traktionsbatterie-Ladezustand B ein.

Von großer Bedeutung ist vorliegend, dass für die kontinuierliche Ermittlung der Eigen-Wunschgeschwindigkeit VW nicht erforderlich ist, dass alle Fremd-Wunschgeschwindigkeiten aller Mitglieder des Peletons 100 bekannt sind. Es werden jeweils nur die Fremd-Wunschgeschwindigkeiten von den Pedelecs des Peletons 100 ausgewertet, die von dem Empfangsmodul 50 empfangen werden.

Diese kontinuierliche Ermittlung und Neufestlegung der Eigen-Wunschgeschwindigkeit erfolgt quasi-kontinuierlich und eigenständig durch jede Peleton-Steuerung 40 aller Pedelecs 10,10',10" des Peletons 100. Es wird konsensartig ständig eine gemeinsame Wunschgeschwindigkeit ermittelt. Hierdurch wird eine hohe Redundanz realisiert, was eine hohe Betriebssicherheit beim Fahren im Peleton sicherstellt, und zwar selbst bei Änderung der Kommunikationsstruktur im Betrieb.

## Patentansprüche

1. Pedelec-Peletonsteuerung (40) zur Ermittlung einer Eigen-Wunschgeschwindigkeit in einem Pedelec-Peloton (100) für ein Pedelec (10) mit einem unterstützenden Traktionsmotor (20), mit einem Empfangsmodul (50) und einem Sendemodul (52) zum drahtlosen Empfangen von Fremd-Wunschgeschwindigkeiten (VF) anderer Pedelecs (10',10") des Pedelec-Peletons (100) und
Senden einer Eigen-Wunschgeschwindigkeit an die anderen Peloton-Pedelecs (10',10"),
einem Wunschgeschwindigkeits-Ermittlungsmodul (42) zur Ermittlung einer Eigen-Wunschgeschwindigkeit (VW) aus von dem Empfangsmodul (50) empfangenen Fremd-Wunschgeschwindigkeiten (VF) der anderen Peleton-Pedelecs (10',10"),
einem Eigen-Wunschgeschwindigkeits-Speicher (46), der mit dem Wunschgeschwindigkeits-Ermittlungsmodul (42) verbunden ist, der von diesem die ermittelte Eigen-Wunschgeschwindigkeit (VW) übermittelt bekommt und der mit dem Sendemodul (52) verbunden ist, das die ermittelte Eigen-Wunschgeschwindigkeit (VW) aus dem Eigen-Wunschgeschwindigkeits-Speicher (46) sendet, und
einer Motorsteuerung (44) zur Ansteuerung einer Leistungselektronik (22), die den Traktionsmotor (20) elektrisch speist, wobei die Motorsteuerung (44) den Unterstützungsgrad in Abhängigkeit von der Eigen-Wunschgeschwindigkeit (VW) einstellt.

2. Pedelec-Peletonsteuerung (40) nach Anspruch 1, wobei das Wunschgeschwindigkeits-Ermittlungsmodul (42) in die Ermittlung der Eigen-Wunschgeschwindigkeit (VW) einen Messwert mindestens eines eigenen Pedelec-Sensors (30-36) mit einbezieht, wobei der Messwert von einem Pedelecgeschwindigkeits-Sensor (35), einem Batterieladungs-Sensor (36), einem Wind-Sensor (34), einem Außentemperatur-Sensor (33) und/oder einem Nickwinkel- Sensor (32) kommt.

3. Pedelec-Peletonsteuerung (40) nach Anspruch 1 oder 2, wobei ein Fahrer-Ermüdungsmodell-Modul (70) vorgesehen ist, das einen Fahrer-Ermüdungswert (E) ermittelt und das mit dem Wunschgeschwindigkeits-Ermittlungsmodul (42) verbunden ist, das die Eigen-Wunschgeschwindigkeit (VW) in Abhängigkeit von dem Fahrer-Ermüdungswert (E) ermittelt.

4. Pedelec-Peletonsteuerung (40) nach einem der vorangegangenen Ansprüche, wobei ein Navigationsgerät (26) vorgesehen ist, das Höhenprofil-Daten (H) des geplanten Fahrwegs zum Navigationsziel an das Wunschgeschwindigkeits-Ermittlungsmodul (42) sendet, das die Eigen-Wunschgeschwindigkeit (VW) in Abhängigkeit von den Höhenprofil-Daten (H) ermittelt.

5. Verfahren zur Ermittlung einer Eigen-Wunschgeschwindigkeit (VW) mit einer Pedelec-Peletonsteuerung (40) mit den Merkmalen einer der vorangegangenen Ansprüche, mit den Verfahrensschritten:
Einlesen aller verfügbaren Fremd-Wunschgeschwindigkeiten (VF) der fremden Peleton-Pedelecs (10', 10") aus dem Empfangsmodul (50) in das Wunschgeschwindigkeits-Ermittlungsmodul (42),
Ermittlung der neuen Eigen-Wunschgeschwindigkeit (VW) in dem Wunschgeschwindigkeits-Ermittlungsmodul (42), und
Senden der neuen Eigen-Wunschgeschwindigkeit (VW) durch das Sendemodul (52).

6. Verfahren nach Anspruch 5, wobei die neue Eigen-Wunschgeschwindigkeit (VW) an die Motorsteuerung (44) übertragen wird.

## Claims

1. Pedelec peleton control (40) for determining a user- desired speed in a pedelec peloton (100) for a pedelec (10) with an assisting traction motor (20), with a receiving module (50) and a transmitting module (52) for wirelessly receiving third party desired speeds (VF) of other pedelecs (10',10") of the pedelec peloton (100) and transmitting a user desired speed to the other peloton pedelecs (10',10"),
a user desired speed determination module (42) for determining a user desired speed (VW) from third-party desired speeds (VF) of the other peloton pedelecs (10',10") received by the receiving module (50)
a user desired speed memory (46), which is connected to the desired speed determination module (42), which receives the determined user desired speed (VW) from the latter and which is connected to the transmitting module (52), which transmits the determined user desired speed (VW) from the user desired speed memory (46), and
a motor control (44) for controlling a power electronics unit (22) which electrically energizes the traction motor (20), the motor control (44) setting the assistance level as a function of the user desired speed (VW).

2. The pedelec peleton control (40) according to claim 1, wherein the desired speed determination module (42) includes a measured value of at least one own pedelec sensor (30-36) in the determination of the user desired speed (VW), wherein the measured value comes from a pedelec speed sensor (35), a battery charge sensor (36), a wind sensor (34), an outside temperature sensor (33) and/or a pitch angle sensor (32).

3. The pedelec peleton controller (40) according to claim 1 or 2, wherein a rider fatigue model module (70) is provided, which determines a rider fatigue value (E) and which is connected to the desired speed determination module (42), which determines the user desired speed (VW) as a function of the rider fatigue value (E).

4. The pedelec peleton controller (40) according to any of the preceding claims, wherein a navigation device (26) is provided that sends elevation profile data (H) of the planned route to the navigation destination to the desired speed determination module (42), which determines the user desired speed (VW) as a function of the elevation profile data (H).

5. A method for determining a user desired speed (VW) with a pedelec peleton controller (40) having the features of any of the preceding claims, comprising the method steps:
Reading all available third-party desired speeds (VF) of the third-party peleton pedelecs (10', 10") from the receiving module (50) into the desired speed determination module (42),
determining the new user desired speed (VW) in the desired speed determination module (42), and
transmitting the new user desired speed (VW) by the transmitting module (52).

6. The method according to claim 5, wherein the new self desired speed (VW) is transmitted to the motor control (44).

## Revendications

1. Le contrôle de peleton de pedelec (40) pour déterminer une vitesse souhaitée par l'utilisateur dans un peloton de pedelec (100) pour un pedelec (10) avec un moteur de traction d'assistance (20), avec un module de réception (50) et un module d'émission (52) pour recevoir sans fil des vitesses souhaitées par des personnes tierces (VF) d'autres pedelecs (10', 10") du peloton de pedelec (100) et transmettre une vitesse souhaitée par l'utilisateur aux autres pedelecs de peloton (10', 10"),
un module de détermination de la vitesse souhaitée par l'utilisateur (42) pour déterminer une vitesse souhaitée par l'utilisateur (VW) à partir des vitesses souhaitées par une personne tierce (VF) des autres pedelecs du peloton (10', 10") reçues par le module de réception (50)
une mémoire de vitesse souhaitée par l'utilisateur (46), qui est connectée au module de détermination de vitesse souhaitée (42), qui reçoit la vitesse souhaitée par l'utilisateur déterminée (VW) de ce dernier et qui est connectée au module d'émission (52), qui transmet la vitesse souhaitée par l'utilisateur déterminée (VW) de la mémoire de vitesse souhaitée par l'utilisateur (46), et
un contrôle de moteur (44) pour contrôler une unité électronique de performance (22) qui énergise électriquement le moteur de traction (20), le contrôle de moteur (44) réglant le niveau d'assistance en fonction de la vitesse souhaitée par l'utilisateur (VW).

2. Le contrôle du peleton de pedelec (40) selon la revendication 1, dans lequel le module de détermination de la vitesse désirée (42) inclut une valeur mesurée d'au moins un capteur de pedelec propre (30-36) dans la détermination de la vitesse désirée par l'utilisateur (VW), dans lequel la valeur mesurée provient d'un capteur de vitesse de pedelec (35), d'un capteur de charge de batterie (36), d'un capteur de vent (34), d'un capteur de température extérieure (33) et/ou d'un capteur d'angle de tangage (32).

3. Le contrôle de peleton pedelec (40) selon la revendication 1 ou 2, dans lequel un module de modèle de fatigue du cycliste (70) est prévu, qui détermine une valeur de fatigue du cycliste (E) et qui est connecté au module de détermination de la vitesse souhaitée (42), qui détermine la vitesse souhaitée par l'utilisateur (VW) en fonction de la valeur de fatigue du cycliste (E).

4. Le contrôle de peleton pedelec (40) selon l'une quelconque des revendications précédentes, dans lequel un appareil de navigation (26) est prévu qui envoie des données de profil d'élévation (H) de l'itinéraire planifié vers la destination de navigation au module de détermination de vitesse souhaitée (42), qui détermine la vitesse souhaitée par l'utilisateur (VW) en fonction des données de profil d'élévation (H).

5. Une méthode pour déterminer une vitesse souhaitée par l'utilisateur (VW) avec un contrôle de peleton de pedelec (40) ayant les caractéristiques de l'une quelconque des revendications précédentes, comprenant les étapes de méthode :
lire toutes les vitesses souhaitées par des personnes tierces (VF) disponibles des pedelecs peleton des personnes tierces (10', 10") à partir du module de réception (50) dans le module de détermination de la vitesse souhaitée (42),
déterminer la nouvelle vitesse souhaitée par l'utilisateur (VW) dans le module de détermination de la vitesse souhaitée (42), et transmettre la nouvelle vitesse souhaitée par l'utilisateur (VW) par le module de transmission (52).

6. Méthode selon la revendication 5, dans laquelle la nouvelle vitesse souhaitée par l'utilisateur (VW) est transmise au contrôle du moteur (44).
